(19) Europäisches Patentamt
European Patent Office
Office européen des brevets

(11) EP 0 754 657 B1

(12) **EUROPÄISCHE PATENTSCHRIFT**

(45) Veröffentlichungstag und Bekanntmachung des Hinweises auf die Patenterteilung:
**27.12.2000 Patentblatt 2000/52**

(51) Int Cl.[7]: **C04B 24/26**, C08F 220/06, C08F 220/56

(21) Anmeldenummer: **96111237.2**

(22) Anmeldetag: **12.07.1996**

(54) **Verwendung wässriger Polymerisatdispersionen zum Modifizieren mineralischer Baustoffe**

Use of aqueous polymeric compositions for modifying mineral building material

Utilisation de compositions polymériques aqueuses pour modifier des matériaux de construction minéraux

(84) Benannte Vertragsstaaten:
**AT BE CH DE DK ES FI FR GB GR IE IT LI NL PT SE**

(30) Priorität: **19.07.1995 DE 19526336**

(43) Veröffentlichungstag der Anmeldung:
**22.01.1997 Patentblatt 1997/04**

(73) Patentinhaber: **BASF AKTIENGESELLSCHAFT
67056 Ludwigshafen (DE)**

(72) Erfinder:
- **Dragon, Andree
67346 Speyer (DE)**
- **Gulden, Rolf
67227 Frankenthal (DE)**
- **Angel, Maximilian, Dr.
67105 Schifferstadt (DE)**

(56) Entgegenhaltungen:
**EP-A- 0 629 650**
**EP-A- 0 630 919**
**EP-A- 0 698 586**
**DD-A- 134 760**
**DE-A- 4 317 036**

- **CHEMICAL ABSTRACTS, vol. 111, no. 4, 24.Juli 1989 Columbus, Ohio, US; abstract no. 24110, XP002017361 & PL 138 319 B (WROCLAWSKA FABRYKA FARB I LAKIEROW) 29.Februar 1988**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 754 657 B1

Printed by Jouve, 75001 PARIS (FR)

## Beschreibung

Vorliegende Erfindung betrifft die Verwendung wäßriger Polymerisatdispersionen, deren in disperser Verteilung befindliches Polymerisat, bezogen auf sein Gesamtgewicht, aus

| | |
|---|---|
| > 0 bis < 5 Gew.-% | (Meth)acrylsäure und/oder einem ihrer Salze (Monomere I), |
| > 0 bis < 5 Gew.-% | (Meth)acrylamid (Monomere II) und als Restmenge |
| 90 bis 97,5 Gew.-% | sonstigen nichtionischen, wenigstens eine ethylenisch ungesättigte Gruppe aufweisenden Monomeren (Monomere III) |

in radikalisch polymerisierter Form aufgebaut ist, und in Form von Polymerisatteilchen vorliegt, deren gewichtsmittlerer Durchmesser 100 bis 300 nm beträgt, zum Modifizieren mineralischer Baustoffe. (Meth)acrylsäure steht in dieser Schrift für Acrylsäure und/oder Methacrylsäure. (Meth)acrylamid steht für Acrylamid und/oder Methacrylamid.

Außerdem betrifft die vorliegende Erfindung Verfahren zur Herstellung von erfindungsgemäß zu verwendenden wäßrigen Polymerisatdispersionen sowie erfindungsgemäß zu verwendende wäßrige Polymerisatdispersionen selbst.

Wäßrige Polymerisatdispersionen (Latices) sind allgemein bekannt. Es handelt sich um fluide Systeme, die als disperse Phase in wäßrigem Dispergiermedium aus mehreren ineinander verschlungenen Polymerisatketten bestehende Polymerisatknäuel (sogenannte Polymerisatteilchen) in disperser Verteilung befindlich enthalten. Der Durchmesser der Polymerisatteilchen liegt im allgemeinen hauptsächlich im Bereich von 10 nm bis 1000 nm (der Begriff Polymerisat soll hier nur solche hochmolekularen Verbindungen umfassen, die durch radikalische Polymerisation von Gemischen von wenigstens eine ethylenisch ungesättigte Gruppierung aufweisenden Monomeren erhältlich sind, wobei die überwiegende Menge der Monomeren dieser Gemische so beschaffen ist, daß sie beim Eintrag in neutrales (pH = 7) Wasser bei 25°C und 1 atm keine ionische Ladung auszubilden vermag; solche Monomeren sollen hier als nichtionische Monomere bezeichnet werden).

Ferner sind mineralische Bindemittel allgemein bekannt. Es handelt sich um pulverförmige anorganische Stoffe wie Kalk, Gips und/oder insbesondere Zement, die durch Anrühren mit Wasser in ihre gebrauchsfertige Form überführt werden, wobei letztere beim sich selbst überlassen, an der Luft oder auch unter Wasser, als Funktion der Zeit steinartig verfestigen. Üblicherweise werden sie zur Herstellung von mineralischen Baustoffen wie Mörteln oder Betonen eingesetzt, indem man beim Anmachen mit Wasser feinteilige oder gröbere Zuschläge wie Sand oder Steine zusetzt.

Es ist außerdem allgemein bekannt, daß mineralische Baustoffe zur gezielten Steuerung ihres Eigenschaftsprofils in mit Polymerisaten modifizierter Form eingesetzt werden. Als modifizierende Polymerisate kommen dabei Polymerisate unterschiedlichsten Monomerenaufbaus in Betracht (vgl. z.B. US-A 4 340 510, GB-PS 1 505 558, US-A 3 196 122, US-A 3 043 790, US-A 3 239 479, DE-A 4 317 035, DE-A 4 317 036, DE-A 43 20 220, EP-A 537 411, DE-AS 16 69 903, BE-A 84 54 499, JP-A 54/43285, US-A 4 225 496, DE-A 32 20 384, DE-A 28 37 898, US-A 3 232 899, DD-134 760 und die JP-A 91/131533).

Die modifizierende Wirkung ist dabei häufig weniger eine Frage der chemischen Beschaffenheit des modifizierenden Polymerisats, als vielmehr eine Frage von dessen physikalischen Eigenschaften. Als solche physikalischen Eigenschaften sind in erster Linie die Glasübergangstemperatur (vgl. z.B. AT-PS 359 904 und EP-A 537 411) und das mittlere Molekulargewicht (vgl. z.B. DE-A 43 17 036 und DE-A 43 17 035) des Polymerisats zu nennen.

Weiterhin ist allgemein bekannt, daß die modifizierende Wirkung der dem jeweiligen mineralischen Baustoff zugesetzten Polymerisate in selbigem um so besser zu Geltung kommt, je feinteiliger das Polymerisat dem mineralischen Baustoff zugesetzt wird.

Üblicherweise erfolgt das Einbringen dieser modifizierend wirkenden Polymerisate daher in Gestalt ihrer wäßrigen Polymerisatdispersionen. Die Vorzüge dieser Verfahrensweise liegen unter anderem darin begründet, daß eine wäßrige Polymerisatdispersion das Polymerisat einerseits bereits in feinteiliger Form enthält und andererseits als Dispergiermedium das zum Anmachen sowieso benötigte Wasser aufweist. Dabei sind gemäß Vorgesagtem normalerweise diejenigen wäßrigen Polymerisatdispersionen besonders vorteilhaft, deren dispergierte Polymerisatteilchen einen besonders kleinen Durchmesser aufweisen.

Nachteilig an der Applikationsform "wäßrige Polymerisatdispersion" ist allenfalls, daß sie als Verkaufsform nicht voll zu befriedigen vermag. So impliziert ihr Transport zum Gebrauchsort neben dem Transport des modifizierenden Polymerisats stets den Transport des überall leicht verfügbaren (Anmach)wassers und andererseits kann sie der mineralischen Bindemasse erst am Gebrauchsort zugesetzt werden, da diese ansonsten vor Gebrauch aushärtet.

Die unter den vorgenannten Gesichtspunkten zweckmäßigste Applikationsform des modifizierend wirkenden Polymerisatzusatzes ist daher diejenige des, ausgehend von seiner möglichst feinteiligen wäßrigen Polymerisatdispersion durch Trocknung gewonnenen, in wäßrigem Medium redispergierbaren, Polymerisatpulvers (eine besonders günstige Methode zur Überführung einer wäßrigen Polymerisatdispersion bildet das Verfahren der Sprühtrocknung, bei

dem die wäßrige Polymerisatdispersion in einem Warmluftstrom versprüht und entwässert wird; vorzugsweise werden die Trockenluft und die versprühte wäßrige Polymerisatdispersion im Gleichstrom durch den Trockner geführt; bei Bedarf werden in an sich bekannter Weise Trockenhilfsmittel mitverwendet; vgl. z.B. EP-A 262 326 oder EP-A 407 889).

Problematisch an wäßrigen Polymerisatdispersionen ist jedoch, daß der Zustand der dispersen Verteilung der Polymerisatpartikel in der Regel thermodynamisch nicht stabil ist. D.h., das System strebt danach, die Grenzfläche "dispergierte Polymerisatpartikel/ wäßriges Dispergiermedium" dadurch zu verkleinern, daß sich mehrere der feinteiligen Polymerisatprimärteilchen zu größeren Polymerisatsekundärteilchen (Koagulat) vereinigen. Dieser Sachverhalt ist bei gegebenem Polymerisatgehalt der wäßrigen Polymerisatdispersion um so kritischer, je feinteiliger die in disperser Verteilung befindlichen Polymerisatteilchen sind, da die vorgenannte Grenzfläche mit abnehmendem Polymerisatteilchendurchmesser überproportional wächst.

Es ist nun weiterhin allgemein bekannt, daß sich die Stabilität der dispersen Verteilung der Polymerisatteilchen mit Hilfe von wasserlöslichen Dispergiermitteln oft über einen Zeitraum von > 1 Monat, vielfach sogar über einen Zeitraum von > 3 Monaten oder > 6 Monaten aufrechterhalten läßt (vgl. z.B. F. Hölscher, Dispersionen synthetischer Hochpolymerer, Teil I, Springer-Verlag, New York (1969)).

Ganz allgemein ausgedrückt, handelt es sich bei Dispergiermitteln um solche Substanzen, die die Grenzfläche "dispergiertes Polymerisat/wäßriges Dispergiermedium" zu stabilisieren vermögen.

Ihre Gesamtmenge läßt sich in zwei Gruppen unterteilen:

a) Schutzkolloide; b) Emulgatoren. Letztere lassen sich wiederum unterscheiden in: a) anionische Emulgatoren; b) kationische Emulgatoren; c) nichtionische Emulgatoren. Die stabilisierende Wirkung von Schutzkolloiden ist in erster Linie auf eine sterische Abschirmung der dispergierten Polymerisatpartikel zurückzuführen. Es handelt sich in der Regel um solche Substanzen, deren Molekulargewicht oberhalb von 1500 liegt. Sie können an die dispergierte Polymerisatpartikel sowohl chemisch als auch nur physikalisch gebunden sein.

Nachteilig an den meisten Schutzkolloiden sind jedoch einmal die verglichen mit Emulgatoren erhöhten Herstellkosten. Desweiteren sind Schutzkolloide im weitesten Sinn selbst polymere Materialien, die daher in der Regel die Wirkung des eigentlichen modifizierenden Polymerisats beeinträchtigen. Ferner vermögen Schutzkolloide in wäßrigem Medium keine Micellen zu bilden. Darauf ist letztlich zurückzuführen, daß in Anwendung einer alleinigen Schutzkolloidstabilisierung feinteilige wäßrige Polymerisatdispersionen nur unter erhöhten Schwierigkeiten herstellbar sind.

Die stabilisierende Wirkung von Emulgatoren, deren Molekulargewicht regelmäßig < 1500 beträgt, ist darauf zurückzuführen, daß sie infolge ihres amphiphilen Aufbaus (polarer Teil und unpolarer Teil) die Grenzflächenspannung der Grenzfläche Polymerisat/wäßriges Dispergiermedium zu reduzieren vermögen. Ist der polare Teil eine kationische Gruppe, spricht man von einem kationischen Emulgator. Handelt es sich bei dem polaren Teil um eine anionische Gruppe, handelt es sich um einen anionischen Emulgator. Im Fall eines nichtionischen polaren Teils spricht man von einem nichtionischen Emulgator. Im Unterschied zu Schutzkolloiden vermögen Emulgatoren in Wasser Micellen auszubilden. Sie sind ferner so beschaffen, daß sie bei Zusatz zu Wasser bei 25°C und 1 atm beim Erreichen der kritischen Micellbildungskonzentration dessen Oberflächenspannung um wenigstens 25 % reduzieren.

Die überwiegende Menge kationischer Emulgatoren ist so beschaffen, daß ihr kationischer Charakter lediglich in Anwesenheit eines sauren wäßrigen Dispergiermediums besteht.

Sie sind daher zur Stabilisierung wäßriger Polymerisatdispersionen, die zur Modifizierung mineralischer Baustoffe verwendet werden sollen, eher ungeeignet, da mineralische Bindemittel normalerweise einen alkalischen Charakter aufweisen. Dieser neutralisiert das saure wäßrige Dispergiermedium, was zur Desaktivierung des kationischen Emulgators und damit letztlich zur Koagulation des dispers verteilten Polymerisats führt, was eine gleichmäßige Verteilung im mineralischen Baustoff verhindert und so die angestrebte modifizierende Wirkung beträchtlich mindert.

Anionische Emulgatoren eignen sich zur Stabilisierung wäßriger Polymerisatdispersionen, die zur Modifizierung mineralischer Baustoffe verwendet werden sollen, nur bedingt, da ihre stabilisierende Wirkung durch die in mineralischen Bindemitteln enthaltenen mehrwertigen Metallionen (z.B. $Ca^{2+}$) beeinträchtigt wird. Dies wird vielfach dadurch ausgeglichen, daß die modifizierenden wäßrigen Polymerisatdispersion mit einer erhöhten Menge anionischer Emulgatoren stabilisiert werden (insbesondere dann, wenn es sich um eine besonders feinteilige wäßrige Polymerisatdispersion handelt).

Nachteilig an dieser Maßnahme ist jedoch, daß Emulgatoren nicht nur die Grenzfläche "dispergiertes Polymerisat/wäßriges Dispergiermedium" zu stabilisieren vermögen, sondern auch die Grenzfläche "Luft/wäßriges Dispergiermedium".

D.h., einen erhöhten Anteil an Emulgator aufweisende wäßrige Polymerisatdispersionen neigen zum Schäumen. Schaumbildung beim Anrühren eines Mörtels zur Herstellung eines mineralischen Baustoffs hinterläßt in letzterem nach Verfestigung in der Regel jedoch unerwünschte Poren, die die mechanischen Eigenschaften des verfestigten mineralischen Baustoffs beeinträchtigen.

Eine andere Möglichkeit, der Mangelhaftigkeit anionischer Emulgatoren abzuhelfen, besteht darin, sie gemeinsam mit nichtionischen Emulgatoren bzw. ausschließlich nichtionische Emulgatoren anzuwenden. Diese Empfehlung geben beispielsweise die EP-A 537 411, die GB-16 04 733 und die DE-AS 24 16 481, wobei insbesondere letztere von einem auf die Menge des dispergierten Polymerisats bezogenen Anteil nichtionischer Emulgatoren von wenigstens 2 Gew.-% ausgeht, wenn die Polymerisatdispersion gegenüber zweiwertigen Elektrolyten stabil sein soll. Der Nachteil nichtionischer Emulgatoren liegt jedoch darin begründet, daß ihr polarer Teil im Unterschied zu den ionischen Emulgatoren nicht punktförmig (wie eine geladene Gruppe), sondern in der Regel eher kettenförmiger Natur (z. B. eine Polyetherkette) ist. Aus dieser Eigenschaft resultiert, daß nichtionische Emulgatoren normalerweise auf Polymerisate als externe Weichmacher wirken. Das bedeutet, daß ein Polymerisat mit einer bestimmten Glasübergangstemperatur Tg im Beisein nichtionischer Emulgatoren wie ein Polymerisat mit einer Glasübergangstemperatur Tg-X (effektive Glasübergangstemperatur) wirkt. Bereits dies ist unerwünscht, da der Betrag von X häufig nicht vorhersehbar ist, was ein zielgerechtes Handeln erschwert. Von weiterem Nachteil ist jedoch, daß die in wäßrigen Polymerisatdispersionen verwendeten Emulgatoren wasserlöslich sind und daher unter Einwirkung von z.B. Regen als Funktion der Zeit ausgewaschen werden oder aufgrund ihres niedermolekularen Charakters auch an die Oberfläche des mineralischen Baustoffs migrieren können. In beiden Fällen wird dadurch eine sich als Funktion der Zeit verändernde effektive Glasübergangstemperatur des modifizierenden Polymerisats und damit eine sich zeitlich verändernde modifizierende Wirkung desselben bedingt, was unerwünscht ist.

Eine Kombination anionischer Emulgatoren mit kationischen Emulgatoren scheidet als Lösungsmöglichkeit ebenfalls aus, da sich anionische und kationische Emulgatoren in ihrer Wirkung kompensieren.

Eine weitere Möglichkeit zur Stabilisierung wäßriger Polymerisatdispersionen besteht bekanntermaßen darin, erhöhte Mengen ethylenisch ungesättigter Carbonsäuren einzupolymerisieren und das wäßrige Dispergiermittel alkalisch zu stellen. Nachteilig an dieser Stabilisierungsweise ist jedoch, daß sie in gewissem Umfang durch mehrwertige Kationen ebenfalls gemindert wird. Ferner ist bekannt, daß zumindest Polyacrylsäure die Verfestigungsdauer mineralischer Bindemittel nach dem Anmachen mit Wasser verzögert.

Erfindungsgemäß wurde nun gefunden, daß wäßrige Polymerisatdispersionen, deren in disperser Verteilung befindliches Polymerisat, bezogen auf sein Gesamtgewicht, aus

> 0 (vorzugsweise ≥ 0,5) bis < 5 Gew.-% (Meth)acrylsäure und/oder einem ihrer Salze (Monomere I),
> 0 (vorzugsweise ≥ 0,5) bis < 5 Gew.-% (Meth)acrylamid (Monomere II) und als Restmenge wenigstens 90 Gew.-% (bevorzugt wenigstens 93 Gew.-%) bis 97,5 Gew.-% (bevorzugt 96 Gew.-%) sonstigen nichtionischen, wenigstens eine ethylenisch ungesättigte Gruppe aufweisenden Monomeren (Monomere III)

in radikalisch polymerisierter Form aufgebaut ist,
bei einem gewichtsmittleren Durchmesser $\bar{d}_w$ der dispergierten Polymerisatteilchen von ≥ 100 nm bis ≤ 300 nm (damit auch bei einem $\bar{d}_w$ von ≥ 100 nm bis ≤ 200 nm)
in befriedigender Weise (Koagulatbildung < 1 Gew.-%, bezogen auf Polymerisat, bei der Herstellung) mit einer auf das dispergierte Polymerisat bezogenen Gesamtmenge von > 0 bis ≤ 3 Gew.-%
an Dispergiermittel, wobei diese Menge an Dispergiermittel keinen kationischen Emulgator und, bezogen auf das dispergierte Polymerisat, höchstens 1 Gew.-% an nichtionischem Emulgator umfaßt sowie zu wenigstens 50 Gew.-% aus anionischem Emulgator besteht, einerseits so stabilisiert werden können, daß die wäßrigen Polymerisatdispersionen über Zementstabilität verfügen (d.h. die Polymerisatdispersion koaguliert beim Einarbeiten in Zement nicht) und andererseits im wesentlichen keine Verzögerung der Verfestigung des mineralischen Bindemittels bedingen. Solche wäßrigen Polymerisatdispersionen sowie die aus ihnen in an sich bekannter Weise erhältlichen redispergierbaren Polymerisatpulver, eignen sich deshalb in besonderer Weise zum Modifizieren mineralischer Baustoffe.

In der Regel beträgt die Dispergiermittelmenge in den erfindungsgemäß zu verwendenden wäßrigen Polymerisatdispersionen, bezogen auf das dispergierte Polymerisat, wenigstens 0,25 Gew.-%. Im Regelfall genügt bereits eine in entsprechender Weise bezogene Dispergiermittelmenge von 0,25 bis 2 Gew.-% bzw. 0,25 bis 1,5 Gew.-%. Bemerkenswerterweise genügt meistens sogar eine in entsprechender Weise bezogene Dispergiermittelmenge von 0,25 bis 1 Gew.-% bzw. 0,5 bis 0,9 Gew.-%. Besonders überrascht, daß das Dispergiermittel kein Schutzkolloid und auch keinen nichtionischen Emulgator umfassen muß. D.h., die erforderliche Stabilität ist auch dann gegeben, wenn das Dispergiermittel ausschließlich anionischen Emulgator umfaßt oder der Anteil an nichtionischem Emulgator, bezogen auf Polymerisat, < 0,5 Gew.-% beträgt.

Vorgenanntes trifft insbesondere dann zu, wenn das dispergierte Polymerisat 1 bis 3 Gew.-% an Monomeren I und 1 bis 3 Gew.-% an Monomeren II einpolymerisiert enthält. Ganz generell beträgt das Gewichtsverhältnis von einpolymerisierten Monomeren I zu einpolymerisiertem Monomeren II bevorzugt 3 : 1 bis 1 : 1. Bevorzugtes Monomeres I ist Acrylsäure und bevorzugtes Monomeres II ist Acrylamid. Mit Vorteil werden diese beiden Monomeren als alleinige Monomere I und II eingesetzt. Bevorzugte Salze der Monomeren I sind deren Alkalimetallsalze, insbesondere das Na- und K-Salz. Aber auch die Ammoniumsalze sind geeignet.

Das zahlenmittlere Molekulargewicht des in den erfindungsgemäß zu verwendenden wäßrigen Polymerisatdispersionen bzw. den aus ihnen resultierenden redispergierbaren Polymerisatpulvern enthaltenen Polymerisats kann

50 000 bis $3 \cdot 10^6$ und mehr betragen. Häufig liegt das zahlenmittlere Molekulargewicht bei 250 000 bis $1{,}5 \cdot 10^6$.

Als Monomere III kommen für die erfindungsgemäß zu verwendenden Dispersionspolymerisate u.a. insbesondere in einfacher Weise radikalisch polymerisierbare nichtionische Monomere in Betracht wie die Olefine, z.B. Ethylen, vinylaromatische Monomere wie Styrol, α-Methylstyrol, o-Chlorstyrol oder Vinyltoluole, Vinyl- und Vinylidenhalogenide wie Vinyl- und Vinylidenchlorid, Ester aus Vinylalkohol und 1 bis 18 C-Atome aufweisenden Monocarbonsäuren wie Vinylacetat, Vinylpropionat, Vinyl-n-butyrat, Vinyllaurat, Vinylpivalat und Vinylstearat sowie im Handel befindliche Monomere VEOVA® 9-11 (VEOVA X ist ein Handelsname der Firma Shell und steht für Vinylester von Carbonsäuren, die auch als Versatic® X-Säuren bezeichnet werden), Ester aus vorzugsweise 3 bis 6 C-Atome aufweisenden α,β-monoethylenisch ungesättigten Carbonsäuren wie Acrylsäure und Methacrylsäure mit im allgemeinen 1 bis 12, vorzugsweise 1 bis 8 und insbesondere 1 bis 4 C-Atome aufweisenden Alkanolen wie besonders Acrylsäure- und Methacrylsäuremethyl-, -ethyl, -n-butyl, -iso-butyl, -tert.-butyl und -2-ethylhexylester, Nitrile α,β-monoethylenisch ungesättigter Carbonsäuren wie Acrylnitril sowie $C_{4-8}$-konjugierte Diene wie 1,3-Butadien und Isopren. In untergeordneten Mengen können auch solche Monomere copolymerisiert werden, die die innere Festigkeit der Verfilmungen der wäßrigen Polymerisatdispersionen erhöhen wie zwei Vinylreste oder zwei Vinylidenreste oder zwei Alkenylreste aufweisende Monomere. Beispielhaft genannt seien die Di-Ester zweiwertiger Alkohole mit α,β-monoethylenisch ungesättigten Monocarbonsäuren unter denen die Acryl- und Methacrylsäure bevorzugt sind.

Die Gewichtsanteile der verschiedenen möglichen cozupolymerisierenden Monomeren III wählt man normalerweise in einfacher Weise so, daß die Glasübergangstemperatur Tg (midpoint temperature gemäß ASTM D 3418-82) der Verfilmung der erfindungsgemäß zu verwendenden wäßrigen Polymerisatdispersion den der gewünschten modifizierenden Wirkung entsprechenden Betrag, der normalerweise im Bereich von -70 bis 110°C liegt, aufweist.

Dabei kann auf die Fox-Beziehung zurückgegriffen werden. Nach Fox (T.G. Fox, Bull. Am. Phys. Soc. (Ser. II) 1, 123 [1956]) und Ullmanns Encyklopädie der technischen Chemie, Bd. 19, 4. Auflage, Verlag Chemie, Weinheim (1980), S. 17, 18 gilt für die Glasübergangstemperatur von Mischpolymerisaten in guter Näherung:

$$\frac{1}{Tg} = \frac{X^1}{Tg^1} + \frac{X^2}{Tg^2} + \ldots\ldots \frac{X^n}{Tg^n},$$

wobei $X^1$, $X^2$, ....., $X^n$ die Massenbrüche 1, 2, ....., n und $Tg^1$, $Tg^2$, ....., $Tg^n$ die Glasübergangstemperaturen der jeweils nur aus einem der Monomeren 1, 2, ....., n aufgebauten Polymeren in Grad Kelvin bedeuten. Die Glasübergangstemperatur Tg dieser Homopolymerisate der vorgenannten Monomere sind bekannt und z.B. in J. Brandrup, E.H. Immergut, Polymer Handbook 1st Ed., J. Wiley, New York 1966, 2nd Ed., J. Wiley, New York 1975 und 3rd Ed., J. Wiley, New York, 1989 sowie in Ullmann's Encyclopedia of Industrial Chemistry, VCH, Weinheim, Vol. A21 (1992), S. 169 aufgeführt.

Wird eine elastifizierende modifizierende Wirkung der erfindungsgemäß zu verwendenden wäßrigen Polymerisatdispersion angestrebt, wird Tg zweckmäßigerweise unterhalb von 0°C liegend gewählt (vgl. AT-359904). Wird eine modifizierende Wirkung gemäß der EP-A 537 411 angestrebt, wählt man Tg zweckmäßigerweise ≥ 30°C.

Zur Modifikation von Reparaturmörtel eignet sich insbesondere der Tg-Bereich von 0 bis 25°C.

Vor diesem Hintergrund eignen sich als Monomere III insbesondere Butadien (als ein besonders weiches Monomeres), Styrol (als besonders hartes Monomeres) und deren Gemische, da bereits durch alleinige Variation der Butadien/Styrol-Gemischzusammensetzung im wesentlichen der gesamte in Betracht kommende Glasübergangstemperaturbereich eingestellt werden kann. Darüber hinaus stellt sich weder bei Styrol noch bei Butadien in wäßrigem alkalischem Medium die Frage der Hydrolysebeständigkeit.

D.h., erfindungsgemäß besonders bevorzugt zu verwendende wäßrige Polymerisatdispersionen sind solche, deren in disperser Verteilung befindliches Polymerisat, bezogen auf sein Gesamtgewicht aus

> 0 bis < 5 Gew.-% (Meth)acrylsäure und/oder einem ihrer Salze,
> 0 bis < 5 Gew.-% (Meth)acrylamid und als Restmenge
90 Gew.-% (bevorzugt 93 Gew.-%) bis 97,5 Gew.-% (bevorzugt 96 Gew.-%) Butadien und/oder Styrol

in radikalisch polymerisierter Form aufgebaut ist.

Zur Stabilisierung der erfindungsgemäß zu verwendenden wäßrigen Polymerisatdispersionen geeignete Schutzkolloide sind beispielsweise Polyvinylalkohole, Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als nichtionische Emulgatoren kommen z.B. in Betracht ethoxylierte Mono-, Di- und Tri-Alkylphenole (EO-Grad: 3 bis 100, Alkylrest: $C_4$ bis $C_{12}$) und ethoxylierte Fettalkohole (EO-Grad: 3 bis 100, Alkylrest: $C_8$ bis $C_{18}$).

Als anionische Emulgatoren kommen insbesondere die Alkali (insbesondere Na und K)- und Ammoniumsalze von anionische Gruppen wie die Sulfatgruppe, Sulfonatgruppe, Carboxylatgruppe, Phosphatgruppe und Phosphonatgruppe tragenden hydrophoben Resten in Betracht, unter denen diejenigen vom Sulfattyp und vom Sulfonattyp bevorzugt sind. Beispiele sind die Alkali (insbesondere Na und K) - und Ammoniumsalze von anionischen Emulgatoren des Sulfat- oder Sulfonat-Typs wie z.B. von $\alpha$-Sulfofettsäuren (10 bis 20 C in der Kohlenstoffkette), von Sulfobernsteinsäureestern (6 bis 12 C in der Alkoholkomponente), von Alkylsulfaten (Alkylrest: $C_8$ bis $C_{16}$), von Alkylsulfonsäuren (Alkylrest: $C_{12}$ bis $C_{18}$) und von Alkoxyarylsulfonsäuren (Alkylrest: $C_9$ bis $C_{18}$) wie Alkylbenzolsulfonsäuren oder Alkylnaphthalinsulfonsäuren. Als geeignete anionische Emulgatoren haben sich insbesondere auch Verbindungen der allgemeinen Formel I (Alkyl-diphenylether-sulfonate)

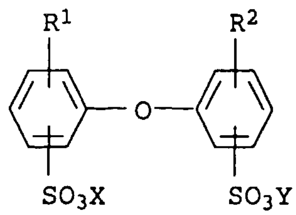

(I),

worin $R^1$ und $R^2$ Wasserstoff oder $C_4$- bis $C_{24}$-Alkyl bedeuten und nicht gleichzeitig Wasserstoff sind, und X und Y Alkalimetallionen und/oder Ammoniumionen sein können, erwiesen. In der Formel I bedeuten $R^1$ und $R^2$ bevorzugt lineare oder verzweigte Alkylreste mit 6 bis 18 C-Atomen oder Wasserstoff, und insbesondere mit 6, 12 und 16 C-Atomen, wobei $R^1$ und $R^2$ nicht beide gleichzeitig Wasserstoff sind. X und Y sind bevorzugt Natrium, Kalium oder Ammoniumionen, wobei Natrium besonders bevorzugt ist. Vorteilhaft sind Verbindungen I in denen X und Y Natrium, $R^1$ ein verzweigter Alkylrest mit 12 C-Atomen und $R^2$ Wasserstoff oder $R^1$ ist. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company) und Dowfax 2 EP. Weiterhin eignen sich Succinate und Alkali- und Ammoniumsalze von Fettsäuren.

Es überrascht, daß die erfindungsgemäß zu verwendenden wäßrigen Polymerisatdispersionen durch ausschließlich anionische Emulgatoren als Dispergiermittel in einer Menge $\leq$ 3 Gew.-%, bezogen auf dispergiertes Polymerisat, in befriedigender Weise stabilisiert werden können.

Bevorzugt sind als anionische Emulgatoren dabei Gemische aus Verbindungen der allgemeinen Formel I (insbesondere der Dowfax 2 EP entsprechende Wirkstoff) und den genannten Alkylsulfaten, Alkylsulfonaten, und/oder Alkylarylsulfonaten (insbesondere Na-, K- und Ammonium-Laurylsulfat). Dies gilt insbesondere dann, wenn die Monomeren III Gemische aus Butadien und Styrol sind. Bevorzugt weisen die anionischen Emulgatoren der erfindungsgemäß zu verwendenden wäßrigen Polymerisatdispersionen keine Polyethergruppen auf. Ferner weisen die erfindungsgemäß erforderlichen Emulgatoren im Regelfall keine radikalisch copolymerisierbare Gruppe auf, zumindest in den Fällen, wo sie bereits während der Polymerisation anwesend sind.

Die Herstellung der erfindungsgemäß zu verwendenden wäßrigen Polymerisatdispersionen kann nach den an sich bekannten Methoden der radikalischen wäßrigen Emulsionspolymerisation erfolgen.

Als radikalische Polymerisationsinitiatoren kommen für die vorstehend beschriebene Hauptpolymerisationsreaktion alle diejenigen in Betracht, die in der Lage sind, eine radikalische wäßrige Emulsionspolymerisation auszulösen. Es kann sich dabei sowohl um Peroxide als auch um Azoverbindungen handeln. Selbstverständlich kommen jedoch auch Redoxinitiatorsysteme in Betracht. Bevorzugt ist die Verwendung von Peroxodischwefelsäure und/oder deren Alkalimetallsalzen (insbesondere K- und Na-Salz) und/oder ihrem Ammoniumsalz als radikalische Starter, insbesondere wenn es sich bei den Monomeren III um Styrol/Butadien-Gemische handeln. Natürlich können aber auch Wasserstoffperoxid, tert.-Butylhydroperoxid oder andere organische Peroxide angewendet werden. Bezogen auf die Menge der zu polymerisierenden Monomeren beträgt die angewendete Initiatormenge in der Regel 0,3 bis 2 Gew.-%.

Die Polymerisationstemperatur liegt, jeweils an den verwendeten Polymerisationsinitiator angepaßt, normalerweise bei 20 bis 100°C. Werden Peroxodischwefelsäure oder ihre Salze als Polymerisationsinitiatoren angewendet, beträgt die Polymerisationstemperatur in typischer Weise 70 bis 90°C. Der Arbeitsdruck der radikalischen wäßrigen Emulsionspolymerisation beträgt normalerweise 1 atm. Bei Copolymerisation leicht flüchtiger Monomere wie Butadien kann er bis zu 10 atm betragen.

Der pH-Wert des wäßrigen Dispergiermediums beträgt während der radikalischen wäßrigen Emulsionspolymerisation im Regelfall 2 bis 5. Puffersysteme, wie Natriumpyrophosphat können mitverwendet werden, um den pH-Wert in diesem Bereich zu halten. Nach beendeter radikalischer wäßriger Emulsionspolymerisation wird der pH-Wert des wäßrigen Dispergiermedium meist auf einen Wert von 3 bis 3, häufiger auf einen Wert von 3 bis 7 eingestellt. Als neutralisierende Base können diesbezüglich z.B. Ammoniak, Natrium- oder Kaliumhydroxid, CaO oder $Ca(OH)_2$ verwendet werden.

Die radikalische wäßrige Emulsionspolymerisation kann sowohl in Batchfahrweise oder in semikontinuierlicher Zulauffahrweise mit und ohne Saat durchgeführt werden. Meist wird als Saat eine feinteilige wäßrige Polymerisatdispersion mit einem gewichtsmittleren Durchmesser der Polymerisatteilchen von > 0 bis < 200 nm, meist < 100 nm, verwendet. Häufig ist es eine Polystyrolsaat. Bemerkenswerterweise ist die Zementstabilität der erfindungsgemäß zu verwendenden wäßrigen Polymerisatdispersionen erhöht, wenn sie, bezogen auf das dispergierte Polymerisat, > 0 (bevorzugt > 0,25) bis ≤ 5 Gew.-% wenigstens einer Substanz enthalten, die mit $Ca^{2+}$ einen Chelatkomplex zu bilden vermag. Bevorzugt liegt das Molekulargewicht dieser Chelatbildner ⊃ 500. Beispiele für solche Chelatbildner sind das Oxalat-Ion $C_2O_4^{2-}$, das Tartrat-Ion $^-O_2C$-CHOH-CHOH-$CO_2^-$ und besonders das Anion der Ethylendiamintetraessigsäure und der Nitrilotriessigsäure. Generell sind zwei-, drei- und vierzähnige Chelatbildner bevorzugt. Ferner sollte die Komplexbildungskonstante des Chelatbildners mit $Ca^{2+}$ nicht kleiner sein als diejenige des Oxalat-Ions (bezogen auf 25°C und 1 atm). In der Regel werden die Chelatbildner bereits während der radikalischen wäßrigen Emulsionspolymerisation zugegeben.

Die Herstellung der erfindungsgemäß zu verwendenden wäßrigen Polymerisatdispersionen erfolgt im Regelfall mit einem Feststoffgehalt von 35 bis 70 Gew.-%. Selbstverständlich können die so erhältlichen wäßrigen Polymerisatdispersionen vor ihrer Verwendung zur Modifizierung mineralischer Baustoffe auf das gewünschte Maß mit Anmachwasser verdünnt werden.

Mit Vorteil eignen sich die erfindungsgemäß zu verwendenden wäßrigen Polymerisatdispersionen bzw. die durch Trocknung (vgl. DE-A 39 23 229, EP-A 78449, DE-A 22 38 903, EP-A 56622 und DE-A 33 44 242) aus diesen Polymerisatdispersionen gewonnenen redispergierbaren Polymerisatpulver als modifizierendes Zusatzmittel für mineralische Baustoffe auf Zementbasis, wobei die Verträglichkeit weitgehend unabhängig von der Zementart ist. Je nach Vorhaben können beispielsweise Hochofenzement, Ölschieferzement, hydrophobierter Portlandzement, Schnellzement, Quellzement, Tonerdezement und besonders bevorzugt Portlandzement verwendet werden.

Bezogen auf Zement beträgt die zuzusetzende Menge an wäßriger Polymerisatdispersion bzw. redispergierbarem Polymerisatpulver je nach Vorhaben > 0 bis ≤ 80, häufig ≥ 3 bis ≤ 50 und meist ≥ 5 bis ≤ 20 Gew.-% (trocken gerechnet). Ferner kommen auf 1 Gew.-Teil Zement meist 2 bis 5 Gew.-Teile mineralische Zuschläge, deren Größtausdehnung im Regelfall > 0 bis 32 mm, häufig > 0 bis 4 mm und meist > 0 bis 2 mm beträgt.

Normalerweise werden die erfindungsgemäß zu verwendenden wäßrigen Polymerisatdispersionen ohne Zusatz von organischen Lösungsmitteln wie Polyglykol sowie ohne Zusatz von Wachsen angewendet.

Eine Gruppe von erfindungsgemäß zu verwendenden wäßrigen Polymerisatdispersionen soll besonders hervorgehoben werden. Es handelt sich dabei um solche wäßrigen Polymerisatdispersionen, deren Monomere III nur aus Butadien und Styrol bestehen, wobei die Anteile an Butadien und Styrol so gewählt sind, daß die Glasübergangstemperatur Tg der Verfilmung der resultierenden wäßrigen Polymerisatdispersion 0 bis 50, vorzugsweise 0 bis 25°C beträgt. Besonders vorteilhaft ist eine Zusammensetzung der Monomeren III von ca. 70 Gew.-% Styrol und ca. 30 Gew.-% Butadien (die Wirkung dieser vorgenannten Polymerisatdispersionen bleibt in etwa erhalten, wenn man bis zu einem Drittel der molaren Mengen an copolymerisiertem Styrol durch andere Vinylaromaten und/oder (Meth)acrylnitril ersetzt).

Diese wäßrigen Polymerisatdispersionen und die aus ihnen durch Trocknung erhältlichen redispergierbaren Polymerisatpulver eignen sich insbesondere zur Modifizierung von zementösem Reparaturmörtel.

Bezogen auf Zement wird das Polymerisat dabei meist in einer Menge von 3 bis 20 Gew.-%, mit Vorteil in einer Menge von 5 bis 10 Gew.-% zugesetzt.

Der so modifizierte Reparaturmörtel erfordert weniger Anmachwasser als üblich, um einen gebrauchsfertigen Zustand zu erreichen. Ferner verfügen solchermaßen modifizierte Reparaturmörtel im gebrauchsfertigen Zustand über hervorragende Standfestigkeit (sie fließen nicht unter Eigengewicht), wie sie z.B. für Reparaturmörtel beim Arbeiten an senkrechten Flächen oder beim Arbeiten über Kopf gefordert wird.

Weitere Vorteile sind eine gute Haftung des gebrauchsfertigen Reparaturmörtels auf mineralischen Untergründen, sowie eine befriedigende mechanische Festigkeit im verfestigten Zustand. In typischer Weise enthalten solche modifizierte Reparaturmörtel

| | |
|---|---|
| 50 bis 70 Gew.-Teile | Sand (arithmetisches Mittel der Korngrößtdurchmesser im Bereich von 0,06 bis 3 mm), |
| 20 bis 30 Gew.-Teile | Zement, |
| 0 bis 2 Gew.-Teile | Thixotropierungsmittel (z.B. Elkem-Mikrosilica), |
| 0 bis 0,3 Gew.-Teile | Fasern, |
| 0,1 bis 1,0 Gew.-Teile | Entschäumer, |
| 0 bis 1 Gew.-Teile | Verflüssiger sowie |

das Dispersionspolymerisat im Gewichtsverhältnis Polymerisat/Zement = 0,05 bis 0,20.

Der Zusatz des Thixotropierungsmittels dient dem Zweck, die Fließfähigkeit des wäßrigen Mörtels vor seiner Verfestigung im Ruhezustand zusätzlich zu erniedrigen.

Von besonderem Vorteil sind dabei solche erfindungsgemäß zu verwendenden wäßrigen Polymerisatdispersionen auf Basis Styrol/Butadien, die nach der Emulsionszulauffahrweise erhältlich sind.

D.h. wenigstens 90 Gew.-% der insgesamt zu polymerisierenden Monomeren werden in in wäßrigem Medium voremulgierter Form dem Polymerisationsgefäß nach Maßgabe ihres Verbrauchs während der radikalischen wäßrigen Emulsionspolymerisation kontinuierlich zugeführt. Da Butadien zwei ethylenisch ungesättigte Doppelbindungen aufweist, wird in die Monomerenemulsion mit Vorteil bis zu 2 Gew.-%, bezogen auf die Gesamtmenge der zu polymerisierenden Monomeren, an Molekulargewichtsreglern wie Mercaptanen gegeben. Bevorzugte Molekulargewichtsregler ist tert.-Dodecylmercaptan. Mit Vorteil werden die Einsatzmenge an Molekulargewichtsregler und die Polymerisationstemperatur so gewählt, daß die Verfilmung der erfindungsgemäß zu verwendenden wäßrigen Polymerisatdispersion einen Gelgehalt von 60 bis 80, bevorzugt von 65 bis 75 Gew.-% aufweist.

Abschließend sei erwähnt, daß die vorgenannten wäßrigen Polymerisatdispersionen und ihre durch Trocknung erhältlichen redispergierbaren Polymerisatpulver auch als Additiv in wäßrigen Bitumenemulsionen und als Bindemittel für wäßrige Papierstreichmassen geeignet sind.

Beispiele

a) Herstellung einer erfindungsgemäß zu verwendenden wäßrigen Polymerisatdispersion

In einem Druckgefäß ($N_2$ gespült) wurden 30,8 kg Wasser, 126 g Dowfax 2 EP (45 gew.-%ige wäßrige Emulgatorzubereitung), 715 g Butadien, 600 g einer 7 gew.-%igen wäßrigen Natriumpersulfatlösung und 2,4 kg einer 30 gew.-%igen wäßrigen Polystyroldispersion (gewichtsmittlerer Polystyrolteilchendurchmesser = 30 nm), die bezogen auf enthaltenes Polystyrol 20 Gew.-%. Na-Alkyl($C_{12}$)benzolsulfonat als Emulgator enthielt, vorgelegt und unter Rühren auf 80°C erwärmt. Nach dem Anspringen der Polymerisation wurden die nachfolgenden Zuläufe A, B und C zeitgleich beginnend innerhalb von 4 h unter Aufrechterhaltung der 80°C dem Polymerisationsgefäß räumlich getrennt zugeführt. Nach Beendigung der Zuläufe wurde das Reaktionsgemisch weitere 2 h bei 80°C gerührt und dann auf Raumtemperatur abgekühlt. Der Polymerisationsumsatz betrug > 99,5 Gew.-% (Restmonomeren können z.B. durch chemische Desodorierung mittels tert. Butylhydroperoxid/Rongalit und/oder physikalische Desodorierung wie Strippen mit Wasserdampf verringert werden). Anschließend wurde der pH-Wert des wäßrigen Dispergiermedium mittels einer 25 gew.-%igen wäßrigen Ammoniaklösung auf einen Wert von 6,5 eingestellt.

Es wurde eine wäßrige Polymerisatdispersion erhalten, deren Feststoffgehalt 50 Gew.-% betrug. Der bei der Polymerisation gebildete Koagulatanteil lag unter 0,5 Gew.-%, bezogen auf die Menge der zu polymerisierenden Monomeren. Die Glasübergangstemperatur der Verfilmung der wäßrigen Polymerisatdispersion betrug 23°C.

Zulauf A:
homogenes Gemisch aus 35,4 kg Wasser, 9,9 kg einer 3 gew.-%igen wäßrigen Natriumpyrophosphatlösung, 500 g einer 0,4 gew.-%igen wäßrigen Lösung von Na-Ethylendiamintetraacetat, 1200 g Dowfax 2EP, 1650 g einer 15 gew.-%igen wäßrigen Lösung von Natriumlaurylsulfat, 1000 g tert.-Dodecylmercaptan, 3,47 kg Acrylsäure, 2,98 kg einer 50 gew.-%igen wäßrigen Acrylamid-Lösung und 63,4 kg Styrol;

Zulauf B: 30 kg Butadien;

Zulauf C: 10,7 kg einer 7 gew.-%igen wäßrigen Natriumpersulfatlösung.

Das dispergierte Polymerisat wies folgende Monomerenzusammensetzung auf:

| | |
|---|---|
| 64,2 Gew.-% | Styrol |
| 30,8 Gew.-% | Butadien |
| 3,48 Gew.-% | Acrylsäure |
| 1,52 Gew.-% | Acrylamid. |

Der gewichtsmittlere Teilchendurchmesser der dispersen Verteilung dieses Polymerisats betrug 160 nm. Die disperse Verteilung war mit folgenden Gewichtsanteilen, bezogen auf die Polymerisatmenge, der nachfolgenden anionischen Emulgatoren stabilisiert:

| | |
|---|---|
| 0,599 Gew.-% | Na-Salz von sulfoniertem Dodecyldiphenylether (Dowfax 2EP) |
| 0,248 Gew.-% | Na-Laurylsulfat |
| 0,144 Gew.-% | Na-Alkyl ($C_{12}$)benzolsulfonat |

b) Gelgehalt der Verfilmung der unter a) erhaltenen wäßrigen Polymerisatdispersion

Aus der 50 gew.-%igen wäßrigen Polymerisatdispersion wurde ein Naßfilm der Dicke 1 mm gegossen und bei 25°C verfilmt. Aus dem Film wurde ein quadratisches Probestück der Masse 1 g herausgeschnitten und bei 23°C in 100 ml Tetrahydrofuran während 48 h sich selbst überlassen (zu Beginn, nach 12 h und nach 36 h wurde der Gefäßinhalt jeweils kurz umgeschwenkt). Nach 48 h wurde der Gefäßinhalt über ein Metallsieb (40 µm) filtriert. Der im Metallsieb verbliebene Rückstand wurde bei 50°C bis zur Gewichtskonstanz getrocknet und durch wägen seine Masse ermittelt. Der prozentuale Anteil der Rückstandsmasse an der Masse der Ursprungsprobe definiert den Gelgehalt. Er betrug 73 Gew.-%

c) Untersuchung der Zementstabilität der wäßrigen Polymerisatdispersion aus a)

50 g der wäßrigen Polymerisatdispersion wurden in einer Schale vorgelegt und unter Rühren langsam (innerhalb von 15 s) mit 50 g Portlandzement PZ 45F versetzt. Nach beendeter Zementzugabe wurde das Gemisch noch 1 Minute gerührt.

Die resultierende Masse war homogen und streichfähig, was die Zementstabilität der wäßrigen Polymerisatdispersion ausweist (bei nicht gegebener Zementstabilität resultieren krümelige oder gelartige Massen).

d) Anwendungstechnische Prüfung von mit der wäßrigen Polymerisatdispersion aus a) modifiziertem Zementmörtel

Zusammensetzung der Mörtelmasse:

| | |
|---|---|
| 250 g | Quarzsand gemäß DIN 1164, Teil 7 der Korngruppe 0,08 bis 0,5 mm |
| 500 g | Quarzsand gemäß DIN 1164, Teil 7 der Korngruppe 0,5 bis 1,0 mm |
| 217 g | Portlandzement 35F |
| 95 g | Wasser |
| 55 g | wäßrige Polymerisatdispersion aus a) |

Zur Überprüfung der anwendungstechnischen Eigenschaften wurde der frische angerührte Mörtel auf seine Verarbeitungseigenschaften geprüft, indem er mit einer Kelle an eine trockene, d.h. nicht vorgenäßte Betonplatte angeworfen wurde.

Beurteilt wurde nachfolgende Eigenschaften I bis IV:

I: Soforthaftung des angeworfenen Mörtels an der Betonplatte
(Haftung des kompletten angeworfenen Materials an der Platte = 1; gesamtes angeworfenes Material prallt von der Betonplatte ab, d.h. haftet nicht = 6;)

II. Sofortstandfestigkeit des Mörtels an der Betonplatte
(ein angeworfener Mörtelkegel von ca. 5 cm Dicke zeigt kein Absacken an der Platte = 1; der Mörtel haftet zwar an der Platte, fließt jedoch sofort von der Wand = 6;)

III. Modellierbarkeit (Nacharbeitbarkeit) und Standfestigkeit des Mörtels an der Betonplatte
(der Mörtel ist ausgezeichnet modellierbar und auch unter den Bedingungen des Modellierens standfest = 1; Mörtel fällt unter den Bedingungen des Modellierens vollständig von Platte oder verflüssigt unter den Bedingungen des Modellierens und fließt von der Wand = 6;)

IV: Klebrigkeit des Mörtels am Werkzeug
(keine Werkzeugklebrigkeit = 1; sehr starke Klebrigkeit am Werkzeug = 6;)

Die erzielten Ergebnisse zeigt die nachfolgende Tabelle

| Eigenschaft | Beurteilung |
|---|---|
| I | 1 |
| II | 1 |

(fortgesetzt)

| Eigenschaft | Beurteilung |
|---|---|
| III | 1 |
| IV | 1 |

**Patentansprüche**

**1.** Verfahren zur Herstellung von mit Polymerisaten modifizierten mineralischen Baustoffen, bei dem man in eine ein mineralisches Bindemittel und mineralische Zuschläge enthaltende Trockenzubereitung eine wäßrige Dispersion des modifizierend wirkenden Polymerisats einarbeitet, dadurch gekennzeichnet, daß das in der wäßrigen Polymerisatdispersion in disperser Verteilung befindliche Polymerisat, bezogen auf sein Gesamtgewicht, aus

| | |
|---|---|
| > 0 bis < 5 Gew.-% | (Meth)acrylsäure und/oder einem ihrer Salze (Monomere I), |
| > 0 bis < 5 Gew.-% | (Meth)acrylamid (Monomere II) und als Restmenge |
| 90 bis 97,5 Gew.-% | sonstigen nichtionischen, wenigstens eine ethylenisch ungesättigte Gruppe aufweisenden Monomeren (Monomere III) |

in radikalisch polymerisierter Form aufgebaut ist und in Form von Polymerisatteilchen vorliegt, deren gewichtsmittlerer Durchmesser 100 bis 300 nm beträgt.

**2.** Verfahren nach Anspruch 1, dadurch gekennzeichnet, daß das in disperser Verteilung befindliche Polymerisat 93 bis 96 Gew.-% Monomere III in radikalisch polymerisierter Form einpolymerisiert enthält.

**3.** Verfahren nach Anspruch 1 oder 2, dadurch gekennzeichnet, daß der gewichtsmittlere Durchmesser der in disperser Verteilung befindlichen Polymerisatteilchen 100 bis 200 nm beträgt.

**4.** Verfahren nach Anspruch 1 bis 3, dadurch gekennzeichnet, daß die Gesamtmenge an Dispergiermittel in der wäßrigen Dispersion des modifizierend wirkenden Polymerisats, auf dessen Menge bezogen, > 0 bis ≤ 3 Gew.-% beträgt, bezogen auf das dispergierte Polymerisats höchstens 1 Gew.-% an nichtionischem Emulgator umfaßt, sowie zu wenigstens 50 Gew.-% aus anionischem Emulgator besteht.

**5.** Verfahren nach Anspruch 4, dadurch gekennzeichnet, daß die Gesamtmenge an Dispergiermittel, bezogen auf das dispergierte Polymerisat, 0,25 bis 3 Gew.-% beträgt.

**6.** Verfahren nach Anspruch 4, dadurch gekennzeichnet, daß die Gesamtmenge an Dispergiermittel, bezogen auf das dispergierte Polymerisat, 0,25 bis 2 Gew.-% beträgt.

**7.** Verfahren nach Anspruch 4, dadurch gekennzeichnet, daß die Gesamtmenge an Dispergiermittel, bezogen auf das dispergierte Polymerisat, 0,25 bis 1,5 Gew.-% beträgt.

**8.** Verfahren nach Anspruch 4, dadurch gekennzeichnet, daß die Gesamtmenge an Dispergiermittel, bezogen auf das dispergierte Polymerisat, 0,25 bis 1 Gew.-% beträgt.

**9.** Verfahren nach Anspruch 4, dadurch gekennzeichnet, daß die Gesamtmenge an Dispergiermittel, bezogen auf das dispergierte Polymerisat, 0,5 bis < 1 Gew.-% beträgt.

**10.** Verfahren nach Anspruch 4 bis 9, dadurch gekennzeichnet, daß das Dispergiermittel keinen nichtionischen Emulgator umfaßt.

**11.** Verfahren nach Anspruch 4 bis 9, dadurch gekennzeichnet, daß das Dispergiermittel ausschließlich aus anionischen Emulgatoren besteht.

**12.** Verfahren nach Anspruch 1 bis 11, dadurch gekennzeichnet, daß das in disperser Verteilung befindliche Polymerisat 1 bis 3 Gew.-% an Monomeren I und 1 bis 3 Gew.-% an Monomeren II einpolymerisiert enthält.

**13.** Verfahren nach Anspruch 1 bis 12, dadurch gekennzeichnet, daß das in disperser Verteilung befindliche Polymerisat die Monomeren I und II im Gewichtsverhältnis 3(I):1(II) bis 1:1 einpolymerisiert enthält.

**14.** Verfahren nach Anspruch 1 bis 13, dadurch gekennzeichnet, daß das in disperser Verteilung befindliche Polymerisat als Monomere I Acrylsäure und/oder deren Salze und als Monomeres II Acrylamid einpolymerisiert enthält.

**15.** Verfahren nach Anspruch 1 bis 14, dadurch gekennzeichnet, daß die Glasübergangstemperatur der Verfilmung der wäßrigen Polymerisatdispersion -70 bis 100°C beträgt.

**16.** Verfahren nach Anspruch 1 bis 15, dadurch gekennzeichnet, daß die Glasübergangstemperatur der Verfilmung der wäßrigen Polymerisatdispersion 0 bis -70°C beträgt.

**17.** Verfahren nach Anspruch 1 bis 15, dadurch gekennzeichnet, daß die Glasübergangstemperatur der Verfilmung der wäßrigen Polymerisatdispersion 30 bis 110°C beträgt.

**18.** Verfahren nach Anspruch 1 bis 16, dadurch gekennzeichnet, daß die Monomeren III ausschließlich Styrol und/oder Butadien sind.

**19.** Verfahren nach Anspruch 18, dadurch gekennzeichnet, daß die Glasübergangstemperatur der Verfilmung der wäßrigen Polymerisatdispersion 0 bis 50°C beträgt.

**20.** Verfahren nach Anspruch 18, dadurch gekennzeichnet, daß die Glasübergangstemperatur der Verfilmung der wäßrigen Polymerisatdispersion 0 bis 25°C beträgt.

**21.** Verfahren nach Anspruch 18, dadurch gekennzeichnet, daß die Monomeren III aus 70 Gew.-% Styrol und 30 Gew.-% Butadien bestehen.

**22.** Verfahren nach Anspruch 1 bis 18, dadurch gekennzeichnet, daß das Dispergiermittel wenigstens einen der nachfolgenden Emulgatoren umfaßt: Alkali- und Ammoniumsalze von Alkylsulfaten (Alkylrest: $C_8$ bis $C_{16}$), Alkali- und Ammoniumsalze von Alkylsulfonsäuren (Alkylrest: $C_{12}$ bis $C_{18}$), Alkali- und Ammoniumsalze von Alkylarylsulfonsäuren sowie Alkali- und Ammoniumsalze von sulfonierten Diphenylethern.

**23.** Verfahren nach Anspruch 1 bis 22, dadurch gekennzeichnet, daß die wäßrige Polymerisatdispersion eine Verbindung enthält, die mit $Ca^{2+}$ einen Chelatkomplex zu bilden vermag.

**24.** Verfahren nach Anspruch 1 bis 23, dadurch gekennzeichnet, daß die wäßrige Polymerisatdispersion Ethylendiamintetraessigsäure und/oder deren Anion enthält.

**25.** Verfahren nach Anspruch 1 bis 24, dadurch gekennzeichnet, daß das mineralische Bindemittel Zement ist.

**26.** Verfahren nach Anspruch 25, dadurch gekennzeichnet, daß man bezogen auf die Menge an Zement > 0 bis 80, oder ≥ 3 bis ≤ 50 oder ≥ 5 bis ≤ 20 Gew.-% an wäßriger Polymerisatdispersion (trocken gerechnet) einarbeitet.

**27.** Verfahren nach Anspruch 1 bis 26, dadurch gekennzeichnet, daß die wäßrige Polymerisatdispersion in Form von Wasser und den aus der wäßrigen Polymerisatdispersion durch Trocknung erhaltenen redispergierbaren Polymerisatpulver eingearbeitet wird.

**28.** Verwendung einer wäßrigen Polymerisatdispersion, deren in disperser Verteilung befindliches Polymerisat, bezogen auf sein Gesamtgewicht, aus

| | |
|---|---|
| > 0 bis < 5 Gew.-% | (Meth)acrylsäure und/oder einem ihrer Salze (Monomere I), |
| > 0 bis < 5 Gew.-% | (Meth)acrylamid (Monomere II) und als Restmenge |
| 90 bis 97,5 Gew.-% | sonstigen nichtionischen, wenigstens eine ethylenisch ungesättigte Gruppe aufweisenden Monomeren (Monomere III) |

in radikalisch polymerisierter Form aufgebaut ist und in Form von Polymerisatteilchen vorliegt, deren gewichtsmittlerer Durchmesser 100 bis 300 nm beträgt, als Additiv in mineralischen Baustoffen.

**29.** Redispergierbares Polymerisatpulver, erhältlich durch Trocknung einer wäßrigen Polymerisatdispersion, deren in disperser Verteilung befindliches Polymerisat, bezogen auf sein Gesamtgewicht, aus

| | |
|---|---|
| > 0 bis < 5 Gew.-% | (Meth)acrylsäure und/oder einem ihrer Salze (Monomere I), |
| > 0 bis < 5 Gew.-% | (Meth)acrylamid (Monomere II) und als Restmenge |
| 90 bis 97,5 Gew.-% | sonstigen nichtionischen, wenigstens eine ethylenisch ungesättigte Gruppe aufweisenden Monomeren (Monomere III) |

in radikalisch polymerisierter Form aufgebaut ist und in Form von Polymerisatteilchen vorliegt, deren gewichtsmittlerer Durchmesser 100 bis 300 nm beträgt.

**30.** Verwendung von redispergierbaren Polymerisatpulvern nach Anspruch 29 als Additiv in mineralischen Baustoffen.

**31.** Mineralischer Baustoff, enthaltend ein Polymerisatpulver nach Anspruch 29.

**32.** Wäßrige Polymerisatdispersion, deren in disperser Verteilung befindliches Polymerisat, bezogen auf sein Gesamtgewicht, aus

| | |
|---|---|
| > 0 bis < 5 Gew.-% | (Meth)acrylsäure und/oder einem ihrer Salze (Monomere I), |
| > 0 bis < 5 Gew.-% | (Meth)acrylamid (Monomere II) und als Restmenge |
| 90 bis 97,5 Gew.-% | sonstigen nichtionischen, wenigstens eine ethylenisch ungesättigte Gruppe aufweisenden Monomeren (Monomere III) |

in radikalisch polymerisierter Form aufgebaut ist und in Form von Polymerisatteilchen vorliegt, deren gewichtsmittlerer Durchmesser 100 bis 300 nm beträgt und deren Gesamtmenge an Dispergiermittel, bezogen auf das dispergierte Polymerisat, < 3 Gew.-% beträgt, bezogen auf das dispergierte Polymerisat höchstens 1 Gew.-% an nichtionischem Emulgator umfaßt, sowie zu wenigstens 50 Gew.-% aus anionischem Emulgator besteht.

**33.** Verfahren zur Herstellung einer wäßrigen Polymerisatdispersion nach Anspruch 32, dadurch gekennzeichnet, daß man die Monomeren nach der Methode der radikalischen wäßrigen Emulsionspolymerisation polymerisiert.

**34.** Polymerisatpulver, erhältlich durch Sprühtrocknung einer wäßrigen Polymerisatdispersion nach Anspruch 32.

## Claims

**1.** A process for the preparation of mineral building materials modified with polymers, in which an aqueous dispersion of the modifying polymer is incorporated into a dry formulation containing a mineral binder and mineral additives, wherein the polymer present as the disperse phase in the aqueous polymer dispersion is composed of, based on its total weight,

from > 0 to < 5% by weight of (meth)acrylic acid or one of its salts (monomers I),
from > 0 to < 5% by weight of (meth)acrylamide (monomers II) and, as the remaining amount,
from 90 to 97.5% by weight of other nonionic monomers having at least one ethylenically unsaturated group (monomers III)

in a form obtained by free radical polymerization, and is present in the form of polymer particles whose weight average diameter is from 100 to 300 nm.

**2.** A process as claimed in claim 1, wherein the polymer present as the disperse phase contains from 93 to 96% by weight of monomers III as polymerized units in the form obtained by free radical polymerization.

**3.** A process as claimed in claim 1 or 2, wherein the weight average diameter of the polymer particles present as the disperse phase is from 100 to 200 nm.

**4.** A process as claimed in any of claims 1 to 3, wherein the total amount of dispersant in the aqueous dispersion of the modifying polymer is from > 0 to ≤ 3% by weight, based on its amount, comprises not more than 1% by weight, based on the dispersed polymer, of nonionic emulsifier and comprises at least 50% by weight of anionic emulsifier.

5. A process as claimed in claim 4, wherein the total amount of dispersant is from 0.25 to 3% by weight, based on the dispersed polymer.

6. A process as claimed in claim 4, wherein the total amount of dispersant is from 0.25 to 2% by weight, based on the dispersed polymer.

7. A process as claimed in claim 4, wherein the total amount of dispersant is from 0.25 to 1.5% by weight, based on the dispersed polymer.

8. A process as claimed in claim 4, wherein the total amount of dispersant is from 0.25 to 1% by weight, based on the dispersed polymer.

9. A process as claimed in claim 4, wherein the total amount of dispersant is from 0.5 to < 1% by weight, based on the dispersed polymer.

10. A process as claimed in any of claims 4 to 9, wherein the dispersant comprises no nonionic emulsifier.

11. A process as claimed in any of claims 4 to 9, wherein the dispersant consists exclusively of anionic emulsifiers.

12. A process as claimed in any of claims 1 to 11, wherein the polymer present as the disperse phase contains from 1 to 3% by weight of monomers I and from 1 to 3% by weight of monomers II as polymerized units.

13. A process as claimed in any of claims 1 to 12, wherein the polymer present as the disperse phase contains the monomers I and II as polymerized units in a weight ratio of from 3(I):1(II) to 1:1.

14. A process as claimed in any of claims 1 to 13, wherein the polymer present as the disperse phase contains, as polymerized units, acrylic acid or salts thereof as monomers I and acrylamide as monomer II.

15. A process as claimed in any of claims 1 to 14, wherein the glass transition temperature of the film of the aqueous polymer dispersion is from -70 to 100°C.

16. A process as claimed in any of claims 1 to 15, wherein the glass transition temperature of the film of the aqueous polymer dispersion is from 0 to -70°C.

17. A process as claimed in any of claims 1 to 15, wherein the glass transition temperature of the film of the aqueous polymer dispersion is from 30 to 110°C.

18. A process as claimed in any of claims 1 to 16, wherein the monomers III are exclusively styrene or butadiene or styrene and butadiene.

19. A process as claimed in claim 18, wherein the glass transition temperature of the film of the aqueous polymer dispersion is from 0 to 50°C.

20. A process as claimed in claim 18, wherein the glass transition temperature of the film of the aqueous polymer dispersion is from 0 to 25°C.

21. A process as claimed in claim 18, wherein the monomers III consist of 70% by weight of styrene and 30% by weight of butadiene.

22. A process as claimed in any of claims 1 to 18, wherein the dispersant comprises at least one of the following emulsifiers: alkali metal and ammonium salts of alkylsulfates (alkyl radical: $C_8$ to $C_{16}$), alkali metal and ammonium salts of alkylsulfonic acids (alkyl radical: $C_{12}$ to $C_{18}$), alkali metal and ammonium salts of alkylarylsulfonic acids and alkali metal and ammonium salts of sulfonated diphenyl ethers.

23. A process as claimed in any of claims 1 to 22, wherein the aqueous polymer dispersion contains a compound which is capable of forming a chelate complex with $Ca^{2+}$.

24. A process as claimed in any of claims 1 to 23, wherein the aqueous polymer dispersion contains ethylenediaminetetraacetic acid or the anion thereof.

**25.** A process as claimed in any of claims 1 to 24, wherein the mineral binder is cement.

**26.** A process as claimed in claim 25, wherein from > 0 to 80 or from ≥ 3 to ≤ 50 or from ≥ 5 to ≤ 20% by weight, based on the amount of cement and on the dry state, of aqueous polymer dispersion are incorporated.

**27.** A process as claimed in any of claims 1 to 26, wherein the aqueous polymer dispersion is incorporated in the form of water and the redispersible polymer powder obtained from the aqueous polymer dispersion by drying.

**28.** Use of an aqueous polymer dispersion whose polymer present as the disperse phase is composed of, based on its total weight,

from > 0 to < 5% by weight of (meth)acrylic acid or one of its salts (monomers I),
from > 0 to < 5% by weight of (meth)acrylamide (monomers II) and, as the remaining amount,
from 90 to 97.5% by weight of other nonionic monomers having at least one ethylenically unsaturated group (monomers III)

in a form obtained by free radical polymerization, and is present in the form of polymer particles whose weight average diameter is from 100 to 300 nm, as an additive in mineral building materials.

**29.** A redispersible polymer powder obtainable by drying an aqueous polymer dispersion whose polymer present as the disperse phase is composed of, based on its total weight,

from > 0 to < 5% by weight of (meth)acrylic acid or one of its salts (monomers I),
from > 0 to < 5% by weight of (meth)acrylamide (monomers II) and, as the remaining amount,
from 90 to 97.5% by weight of other nonionic monomers having at least one ethylenically unsaturated group (monomers III)

in a form obtained by free radical polymerization, and is present in the form of polymer particles whose weight average diameter is from 100 to 300 nm.

**30.** Use of a redispersible polymer powder as claimed in claim 29 as an additive in mineral building materials.

**31.** A mineral building material containing a polymer powder as claimed in claim 29.

**32.** An aqueous polymer dispersion whose polymer present as the disperse phase is composed of, based on its total weight,

from > 0 to < 5% by weight of (meth)acrylic acid or one of its salts (monomers I),
from > 0 to < 5% by weight of (meth)acrylamide (monomers II) and, as the remaining amount,
from 90 to 97.5% by weight of other nonionic monomers having at least one ethylenically unsaturated group (monomers III)

in a form obtained by free radical polymerization, and is present in the form of polymer particles whose weight average diameter is from 100 to 300 nm, and whose total amount of dispersant is ≤ 3% by weight, based on the dispersed polymer, comprises not more than 1% by weight, based on the dispersed polymer, of nonionic emulsifier and comprises at least 50% by weight of anionic emulsifier.

**33.** A process for the preparation of an aqueous polymer dispersion as claimed in claim 32, wherein the monomers are subjected to free radical aqueous emulsion polymerization.

**34.** A polymer powder obtainable by spray drying an aqueous polymer dispersion as claimed in claim 32.

## Revendications

**1.** Procédé de préparation de matériaux de construction minéraux modifiés par des polymères, dans lequel on incorpore une dispersion aqueuse du polymère à action modifiante dans une préparation sèche contenant un liant minéral et des additifs minéraux, caractérisé en ce que le polymère se trouvant dans une répartition dispersée dans la dispersion aqueuse de polymère, est construit sous forme polymérisée de façon radicalaire, à partir de

> 0 à < 5 % en poids d'acide (méth)acrylique et/ou d'un de leurs sels (monomères I),
> 0 à < 5 % en poids de (méth)acrylamide (monomères II) et pour la quantité restante
90 à 97,5 % en poids d'autres monomères non ioniques, présentant au moins un groupement à insaturation éthylénique (monomères III)

par rapport à son poids total, et se trouve sous forme de particules de polymère, dont le diamètre moyen en poids est de 100 à 300 nm.

**2.** Procédé selon la revendication 1, caractérisé en ce que le polymère se trouvant dans une répartition dispersée contient en liaison polymère 93 à 96 % en poids de monomères III sous forme polymérisée de façon radicalaire.

**3.** Procédé selon la revendication 1 ou 2, caractérisé en ce que le diamètre moyen en poids des particules de polymères se trouvant dans une répartition dispersée est de 100 à 200 nm.

**4.** Procédé selon l'une quelconque des revendications 1 à 3, caractérisé en ce que la quantité totale d'agent dispersant dans la dispersion aqueuse du polymère à action modifiante est > 0 à ≤ 3 % en poids, par rapport à sa quantité, et comprend au plus 1 % en poids d'émulsifiant non ionique, par rapport au polymère dispersé, et est constituée pour au moins 50 % en poids d'émulsifiant anionique.

**5.** Procédé selon la revendication 4, caractérisé en ce que la quantité totale d'agent dispersant, par rapport au polymère dispersé, est de 0,25 à 3 % en poids.

**6.** Procédé selon la revendication 4, caractérisé en ce que la quantité totale d'agent dispersant, par rapport au polymère dispersé, est de 0,25 à 2 % en poids.

**7.** Procédé selon la revendication 4, caractérisé en ce que la quantité totale d'agent dispersant, par rapport au polymère dispersé, est de 0,25 à 1,5 % en poids.

**8.** Procédé selon la revendication 4, caractérisé en ce que la quantité totale d'agent dispersant, par rapport au polymère dispersé, est de 0,25 à 1 % en poids.

**9.** Procédé selon la revendication 4, caractérisé en ce que la quantité totale d'agent dispersant, par rapport au polymère dispersé, est de 0,5 à < 1 % en poids.

**10.** Procédé selon l'une quelconque des revendications 4 à 9, caractérisé en ce que l'agent dispersant ne comprend aucun émulsifiant non ionique.

**11.** Procédé selon l'une quelconque des revendications 4 à 9, caractérisé en ce que l'agent dispersant est composé exclusivement d'émulsifiants anioniques.

**12.** Procédé selon l'une quelconque des revendications 1 à 11, caractérisé en ce que le polymère se trouvant dans une répartition dispersée contient en liaison polymère de 1 à 3% en poids de monomères I et de 1 à 3% en poids de monomères II.

**13.** Procédé selon l'une quelconque des revendications 1 à 12, caractérisé en ce que le polymère se trouvant dans une répartition dispersée contient en liaison polymère les monomères I et II dans un rapport en poids de 3(I):1(II) à 1:1.

**14.** Procédé selon l'une quelconque des revendications 1 à 13, caractérisé en ce que le polymère se trouvant dans une répartition dispersée contient en liaison polymère de l'acide acrylique en tant que monomère I et / ou ses sels et de l'acrylamide en tant que monomère II.

**15.** Procédé selon l'une quelconque des revendications 1 à 14, caractérisé en ce que la température de transition vitreuse du film formé par la dispersion aqueuse de polymère est de -70 à 100°C.

**16.** Procédé selon l'une quelconque des revendications 1 à 15, caractérisé en ce que la température de transition vitreuse du film formé par la dispersion aqueuse de polymère est de 0 à -70°C.

**17.** Procédé selon l'une quelconque des revendications 1 à 15, caractérisé en ce que la température de transition vitreuse du film formé par la dispersion aqueuse de polymère est de 30 à 110°C.

**18.** Procédé selon l'une quelconque des revendications 1 à 16, caractérisé en ce que les monomères III sont exclusivement le styrène et/ou le butadiène.

**19.** Procédé selon la revendication 18, caractérisé en ce que la température de transition vitreuse du film formé par la dispersion aqueuse de polymère est de 0 à 50°C.

**20.** Procédé selon la revendication 18, caractérisé en ce que la température de transition vitreuse du film formé par la dispersion aqueuse de polymère est de 0 à 25°C.

**21.** Procédé selon la revendication 18, caractérisé en ce que les monomères III sont constitués de 70% en poids de styrène et de 30% en poids de butadiène.

**22.** Procédé selon l'une quelconque des revendications 1 à 18, caractérisé en ce que l'agent dispersant comprend au moins un des émulsifiants suivants : sels d'ammonium et de métaux alcalins de sulfates d'alkyle (reste alkyle : $C_8$-$C_{16}$), sels d'ammonium et de métaux alcalins d'acides alkylsulfoniques (reste alkyle : $C_{12}$-$C_{18}$), sels d'ammonium et de métaux alcalins d'acides alkylarylsulfoniques et sels d'ammonium et de métaux alcalins de diphényléthers sulfonés.

**23.** Procédé selon l'une quelconque des revendications 1 à 22, caractérisé en ce que la dispersion aqueuse de polymère contient un composé pouvant former un complexe chélate avec $Ca^{2+}$.

**24.** Procédé selon l'une quelconque des revendications 1 à 23, caractérisé en ce que la dispersion aqueuse de polymère contient de l'acide éthylènediaminetétraacétique et/ou ses anions.

**25.** Procédé selon l'une quelconque des revendications 1 à 24, caractérisé en ce que le liant minéral est du ciment.

**26.** Procédé selon la revendication 25, caractérisé en ce que l'on incorpore > 0 à 80, ou ≥ 3 à ≤ 50 ou ≥ 5 à ≤ 20 % en poids en dispersion aqueuse de polymère (comptée sèche), par rapport à la quantité de ciment.

**27.** Procédé selon l'une quelconque des revendications 1 à 26, caractérisé en ce que la dispersion aqueuse de polymère est incorporée sous forme d'eau et de poudre de polymère redispersable obtenue par séchage de la dispersion aqueuse de polymère.

**28.** Utilisation d'une dispersion aqueuse de polymère, dont le polymère se trouvant dans une répartition dispersée est construit sous forme polymérisée de façon radicalaire, à partir de

> 0 à < 5 % en poids d'acide (méth)acrylique et/ou d'un de leurs sels (monomères I),
> 0 à < 5 % en poids de (méth)acrylamide (monomères II) et pour la quantité restante
90 à 97,5 % en poids d'autres monomères non ioniques, présentant au moins un groupement à insaturation éthylénique (monomères III)

par rapport à son poids total, et se trouve sous forme de particules de polymère, dont le diamètre moyen en poids est de 100 à 300 nm, en tant qu'additif pour des matériaux de construction minéraux.

**29.** Poudre de polymère redispersable, obtenue par séchage d'une dispersion aqueuse de polymère, dont le polymère se trouvant dans une répartition dispersée, est construit sous forme polymérisée de façon radicalaire, à partir de

> 0 à < 5 % en poids d'acide (méth)acrylique et/ou d'un de leurs sels (monomères I),
> 0 à < 5 % en poids de (méth)acrylamide (monomères II) et pour la quantité restante
90 à 97,5 % en poids d'autres monomères non ioniques, présentant au moins un groupement à insaturation éthylénique (monomères III)

par rapport à son poids total, et se trouve sous forme de particules de polymère, dont le diamètre moyen en poids est de 100 à 300 nm.

**30.** Utilisation de poudres de polymères redispersables selon la revendication 29 en tant qu'additif pour des matériaux de construction minéraux.

**31.** Matériau de construction contenant une poudre de polymère selon la revendication 29.

**32.** Dispersion aqueuse de polymère dont le polymère se trouvant dans une répartition, est construit sous forme polymérisée de façon radicalaire, à partir de

> 0 à < 5 % en poids d'acide (méth)acrylique et/ou d'un de leurs sels (monomères I),
> 0 à < 5 % en poids de (méth)acrylamide (monomères II) et pour la quantité restante
90 à 97,5 % en poids d'autres monomères non ioniques, présentant au moins un groupement à insaturation éthylénique (monomères III)

par rapport à son poids total, et se trouve sous forme de particules de polymère, dont le diamètre moyen en poids est de 100 à 300 nm et dont la quantité totale d'agent dispersant est ≤ 3 % en poids, par rapport au polymère dispersé, et comprend au plus 1 % en poids d'émulsifiant non ionique, par rapport au polymère dispersé, et est constituée pour au moins 50 % en poids d'émulsifiant anionique.

**33.** Procédé de préparation d'une dispersion aqueuse de polymère selon la revendication 32, caractérisé en ce que l'on polymérise les monomères selon la méthode de polymérisation radicalaire en émulsion aqueuse.

**34.** Poudre de polymère obtenue par séchage par atomisation d'une dispersion aqueuse de polymère selon la revendication 32.